# EUROPEAN PATENT APPLICATION

(11) **EP 2 604 815 A1**
(43) Date of publication of application: **19.06.2013**
(21) Application number: 11816296.5
(22) Date of filing: 21.07.2011
(51) Int. Cl.: F01K 23/10, F01C 13/04, F01D 15/08, F01D 15/10, F01D 25/12, F01K 13/00, F01K 23/06, F02G 5/04, H02K 9/19

(54) **WASTE HEAT UTILIZATION APPARATUS**

(30) Priority: 09.08.2010 JP 2010178610
(71) Applicant: Kabushiki Kaisha Toyota Jidoshokki, Kariya-shi, Aichi 448-8671 (JP)
(72) Inventor: FUKASAKU, Hiroshi, Kariya-shi Aichi 448-8671 (JP); IGUCHI, Masao, Kariya-shi Aichi 448-8671 (JP); MORI, Hidefumi, Kariya-shi Aichi 448-8671 (JP); ENOKIJIMA, Fuminobu, Kariya-shi Aichi 448-8671 (JP)
(74) Representative: TBK
(86) International application number: PCT/JP2011/066550
(87) International publication number: WO 2012/020630

(57) **Abstract**

A Rankine cycle circuit is constituted by an expander (72), which forms a fluid machine (34), a condenser, a gear pump (67), which forms a fluid machine (34), and a boiler. A discharge passage (47) is connected to a discharge chamber of a pump chamber (64). A branch passage (48) is connected to the discharge passage (47), and a restriction passage (49) is provided at the end of the branch passage (48). The restriction passage (49) is open to an internal space K in a generator housing (37). An outflow passage (50) extends through a partition wall (361) of a center housing member (36) and a side plate (62). The internal space K in which an alternator (43) is located communicates with an outlet chamber (80) through the outflow passage (50).

## Description

### TECHNICAL FIELD

The present invention relates to a waste heat utilization apparatus including an expander that applies rotational force to a drive shaft of an electric rotating machine by utilizing waste heat of a waste heat source.

### BACKGROUND ART

When the temperature of a coil in a generator, which is the electric rotating machine, is increased, the electric resistance of the coil is increased, and the power generation efficiency of the generator is reduced. Thus, the coil of the generator is preferably cooled.

In a Rankine cycle apparatus disclosed in Patent Document 1, an expander casing, which accommodates an expander, and a motor generator casing, which accommodates a motor generator (generator), are coupled in a state sealed from the outside air. An internal space of the expander casing, in which vapor that leaked from an expansion chamber exists, and an internal space of the motor generator casing are connected via an upper communication hole. In Patent Document 1, the leaked vapor in the internal space of the expander casing flows out to the internal space of the motor generator casing via the communication hole, and cools the motor generator.

### PRIOR ART DOCUMENT

### Patent Document

Patent Document 1: Japanese Laid-Open Patent Publication No. 2004-80937

### SUMMARY OF THE INVENTION

### Problems that the Invention is to Solve

A groove and a communication hole provided at the lower part of the motor generator casing are connected to a communication hole provided at the lower part of the expander casing via a return passage formed of a pipe member. That is, the leaked vapor that has flowed out from the internal space of the expander casing via the upper communication hole into the internal space of the motor generator casing is refluxed to the internal space of the expander casing via the return passage. In such a reflux structure, the efficiency of transferring the heat of the leaked vapor that has cooled the motor generator to the outside of the motor generator is poor, and the efficiency for cooling the motor generator is low.

Accordingly, it is an objective of the present invention to provide a waste heat utilization apparatus including an electric rotating machine that has an improved cooling efficiency.

### Means for Solving the Problems

The present invention provides a waste heat utilization apparatus including a waste heat source, an electric rotating machine, a first heat exchanger, which transmits waste heat of the waste heat source to refrigerant that flows in a refrigerant circulation channel, an expander, which applies rotational force to a drive shaft of the electric rotating machine utilizing the refrigerant that has passed through the first heat exchanger, and a second heat exchanger, which absorbs heat from the refrigerant that has passed through the expander. The electric rotating machine and the expander are accommodated in a housing assembly. The waste heat utilization apparatus includes a branch passage, an outflow passage, and delivery means. The branch passage is connected to a section of the refrigerant circulation channel that is upstream of the first heat exchanger and downstream of the second heat exchanger, and to an existence region of the electric rotating machine in the housing assembly. The outflow passage connects a section of the refrigerant circulation channel that is downstream of the first heat exchanger and upstream of the second heat exchanger to the existence region. The delivery means delivers the refrigerant from the branch passage to the outflow passage.

The heat of the refrigerant that has cooled the electric rotating machine is absorbed by the second heat exchanger. Thus, the temperature of the refrigerant that has cooled the electric rotating machine becomes low, and the refrigerant is sent to the first heat exchanger or the existence region of the electric rotating machine. This improves the efficiency for cooling the electric rotating machine.

In a preferable example, the delivery means is located in a section of the refrigerant circulation channel between the second heat exchanger and a connecting portion of the branch passage to the refrigerant circulation channel.

The function of sending the refrigerant to the first heat exchanger and the function of sending the refrigerant to the existence region are performed by single delivery means.

In a preferable example, one of the branch passage and the outflow passage has a restriction part.

The existence of the restriction part is important in adjusting the distribution ratio of the refrigerant to the first heat exchanger and the existence region of the electric rotating machine.

In a preferable example, the branch passage has a restriction part at a section upstream of the existence region of the electric rotating machine.

The structure in which the restriction part is located at a section upstream of the existence region is preferable in the aspect of the strength since the pressure in the existence region can be reduced. Also, since the pressure in the existence region is low, the cooling efficiency using latent heat of the refrigerant is high.

In a preferable example, the delivery means is provided between the electric rotating machine and the expander to be adjacent to the electric rotating machine.

In a preferable example, the outflow passage has a restriction part.

In the structure in which the electric rotating machine is located adjacent to the delivery means, the structure in which the restriction part is located in the outflow passage reduces the seal pressure difference between the electric rotating machine and the expander. Thus, the reliability of the seal is easily ensured.

In a preferable example, the restriction part is a variable restriction mechanism.

The flow rate adjustment by the variable restriction mechanism permits effective utilization of waste heat, that is, when heat generation of the electric rotating machine is small, the liquid refrigerant is sent to the first heat exchanger by a large amount, and the waste heat of the waste heat source is efficiently utilized.

In a preferable example, the waste heat utilization apparatus includes control means for controlling the restriction amount of the variable restriction mechanism, and temperature detecting means for detecting the temperature in the existence region. The control means controls the restriction amount of the variable restriction mechanism based on the temperature detected by the temperature detecting means.

In a preferable example, the waste heat utilization apparatus includes control means for controlling the restriction amount of the variable restriction mechanism, and grasping means for grasping an operating condition reflecting factor, which reflects the operating condition of the electric rotating machine. The control means controls the restriction amount of the variable restriction mechanism based on the operating condition reflecting factor grasped by the grasping means.

In a preferable example, the grasping means grasps an electric power generation reflecting factor, which reflects the electric power generation of the electric rotating machine.

In a preferable example, the delivery means is located at a section of the refrigerant circulation channel upstream of the first heat exchanger and downstream of the second heat exchanger. The waste heat utilization apparatus further includes pressure detecting means for detecting the pressure in a section of the refrigerant circulation channel that is downstream of the delivery means and upstream of the expander. The control means selects the smaller restriction amount from a first restriction amount of the variable restriction mechanism set in accordance with the pressure detected by the pressure detecting means, and a second restriction amount of the variable restriction mechanism set in accordance with the operating condition reflecting factor grasped by the grasping means.

The structure in which one of the first restriction amount and the second restriction amount can be selected permits to select as preferred whether to bring the pressure of the refrigerant upstream of the expander to a desired pressure or to optimally cool the electric rotating machine.

In a preferable example, the restriction part is a variable restriction mechanism. The variable restriction mechanism includes, in the existence region, a bimetal member for increasing the cross-sectional area of the branch passage or the outflow passage in accordance with temperature increase in the existence region.

In a preferable example, the outflow passage is connected to a section of the refrigerant circulation channel downstream of the expander.

In a preferable example, the outflow passage is connected to a section of the refrigerant circulation channel upstream of the expander.

The refrigerant sent from the existence region of the electric rotating machine to a section upstream of the expander recovers waste heat of the electric rotating machine, and the waste heat recovered from the electric rotating machine is utilized for driving the expander.

In a preferable example, an entrance port of the outflow passage is located at a position lower than a rotor of the electric rotating machine.

When the rotor stirs the liquid refrigerant, the liquid refrigerant causes rotational resistance with respect to the rotor. The waste heat that should be recovered for power generation is reduced due to the rotational resistance. Even if the liquid refrigerant collects in the existence region of the electric rotating machine, the liquid surface is lower than the inlet. Thus, the rotor does not stir the liquid refrigerant.

In a preferable example, an entrance port of the outflow passage is located at a position higher than the lowermost position of a rotor of the electric rotating machine.

When the rotor stirs the liquid refrigerant, lubricant mixed in the liquid refrigerant is splashed up together with the liquid refrigerant. Thus, sections that require lubrication are lubricated.

In a preferable example, an exit port of the branch passage is located at a position to guide the refrigerant in the branch passage to a bearing that rotationally supports the drive shaft.

The lubricant mixed in the refrigerant that has reached the bearing from the exit port of the branch passage lubricates the bearing, which increases the reliability of the bearing.

In a preferable example, the waste heat utilization apparatus includes a shaft sealing member for preventing leakage of the refrigerant from the existence region to the outside along the circumferential surface of the drive shaft. An exit port of the branch passage is located at a position to guide the refrigerant in the branch passage to the shaft sealing member.

The lubricant mixed in the refrigerant that has reached the sealing member from the exit port of the branch passage lubricates the sealing member, which increases the reliability of the sealing member.

In a preferable example, the electric rotating machine is a brushless electric rotating machine.

In the brush type rotating machine, the liquid refrigerant might cause a contact failure of the brush, or wear debris of the brush might enter the refrigerant circuit and clog the valve. The brushless generator does not cause such a problem.

In a preferable example, the waste heat source is a combustion engine, and the electric rotating machine is an alternator, which generates electricity by rotation of a rotating output shaft of the combustion engine.

### BRIEF DESCRIPTION OF THE DRAWINGS

Fig. 1 is a cross-sectional side view illustrating the entire fluid machine of a waste heat utilization apparatus according to a first embodiment of the present invention;
Fig. 2 is a schematic diagram illustrating the waste heat utilization apparatus according to the first embodiment of the present invention;
Fig. 3A is a partially enlarged view of Fig. 1;
Fig. 3B is a cross-sectional view taken along line 3B-3B in Fig. 3A;
Fig. 4 is a cross-sectional side view illustrating the entire fluid machine of a waste heat utilization apparatus according to a second embodiment of the present invention;
Fig. 5 is a schematic diagram illustrating a waste heat utilization apparatus according to a third embodiment of the present invention;
Fig. 6 is a schematic diagram illustrating a waste heat utilization apparatus according to a fourth embodiment of the present invention;
Fig. 7 is a cross-sectional side view illustrating the entire fluid machine of a waste heat utilization apparatus according to a fifth embodiment of the present invention;
Fig. 8A is a partial cross-sectional side view illustrating a fluid machine of a waste heat utilization apparatus according to a sixth embodiment of the present invention;
Fig. 8B is a cross-sectional view taken along line 8B-8B in Fig. 8A;
Fig. 9A is a partial cross-sectional side view illustrating a fluid machine of a waste heat utilization apparatus according to a seventh embodiment of the present invention;
Fig. 9B is a cross-sectional view taken along line 9B-9B in Fig. 9A; and
Fig. 10 is a cross-sectional side view illustrating the entire fluid machine of a waste heat utilization apparatus according to an eighth embodiment of the present invention.

### MODE FOR CARRYING OUT THE INVENTION

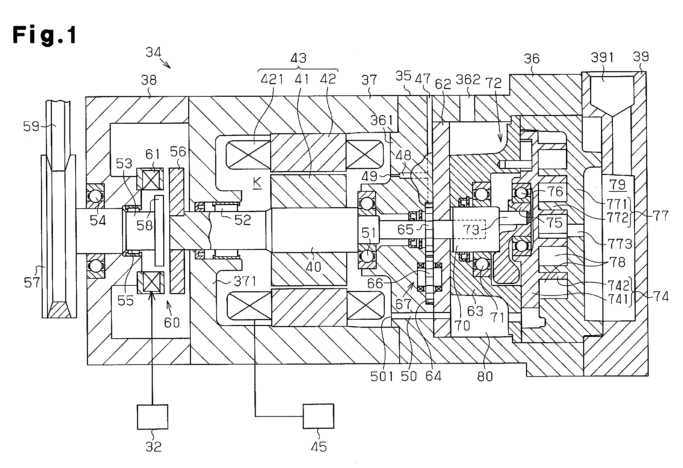

A first embodiment of the present invention will now be described with reference to Figs. 1 to 3B.

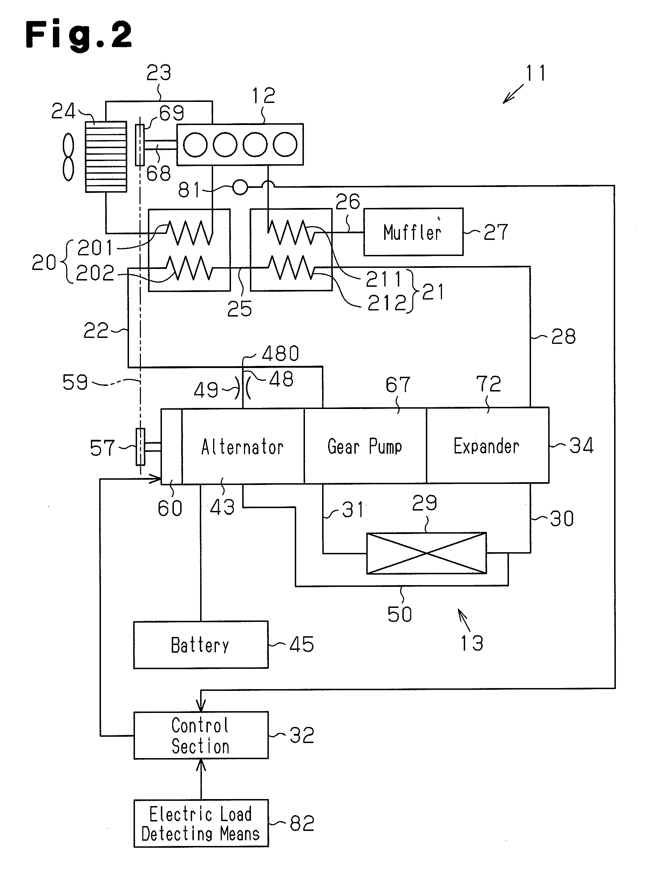

As shown in Fig. 2, a waste heat utilization apparatus 11 includes a waste heat source, which is an engine 12 (combustion engine), and a Rankine cycle circuit 13.

Refrigerant heated by waste heat from the engine 12 circulates in the Rankine cycle circuit 13. A fluid machine 34, which is part of the waste heat utilization apparatus 11, also constitutes part of the Rankine cycle circuit 13.

As shown in Fig. 1, the fluid machine 34 includes a housing assembly 35, and the housing assembly 35 includes a cylindrical center housing member 36, a generator housing member 37, which is coupled to the front end of the center housing member 36 [left end in Fig. 1], and a front housing member 38, which is coupled to the front end of the generator housing member 37, and a rear housing member 39, which is coupled to the rear end of the center housing member 36 [right end in Fig. 1].

A drive shaft 40 is rotationally supported on a partition 361 integrally formed with the center housing member 36 and a front end wall 371 of the generator housing member 37 via bearings 51, 52. A rotor 41 is secured to the drive shaft 40 in the generator housing member 37. A stator 42 is secured to the inner circumferential surface of the generator housing member 37 to surround the rotor 41. The drive shaft 40, the stator 42 including a coil 421, and the rotor 41 constitute a brushless alternator 43 (generator). The drive shaft 40 is a rotor shaft of the alternator 43.

The alternator 43 functions to generate electricity in the coil 421 of the stator 42 by rotation of the rotor 41.

A battery 45 is electrically connected to the alternator 43. The electricity generated by the alternator 43 is stored in the battery 45.

A support shaft 53 is rotationally supported on the front housing member 38 via bearings 54, 55. The support shaft 53 protrudes outside from the front end wall of the front housing member 38, and a pulley 57 is fastened to the protruding end of the front housing member 38. A belt 59 is hooked around the pulley 57. The belt 59 is hooked around a pulley 69 [see Fig. 2] fastened to a crankshaft 68, which is a rotating output shaft of the engine 12 [see Fig. 2]. A fixed clutch member 58 is mounted on the inner end portion of the support shaft 53.

The drive shaft 40 extends through the front end wall 371 and protrudes inside the front housing member 38. The movable clutch member 56 is mounted on the protruding end portion of the drive shaft 40 to face the fixed clutch member 58 and to slide in the axial direction.

When electricity is supplied to a solenoid 61 mounted on the front housing member 38, the movable clutch member 56 is brought into contact with the fixed clutch member 58. Thus, rotation of the support shaft 53 is transmitted to the drive shaft 40. The movable clutch member 56, the fixed clutch member 58, and the solenoid 61 form an electromagnetic clutch 60, which selectively brings the drive shaft 40 into contact with the support shaft 53 and separates the drive shaft 40 from the support shaft 53. The magnetization and demagnetization of the electromagnetic clutch 60 is controlled by a control section 32.

A side plate 62 is fixed in the rear portion of the center housing member 36 to face the partition 361. A pump chamber 64 is defined between the partition 361 and the side plate 62. The drive shaft 40 extends through the partition 361 and the side plate 62.

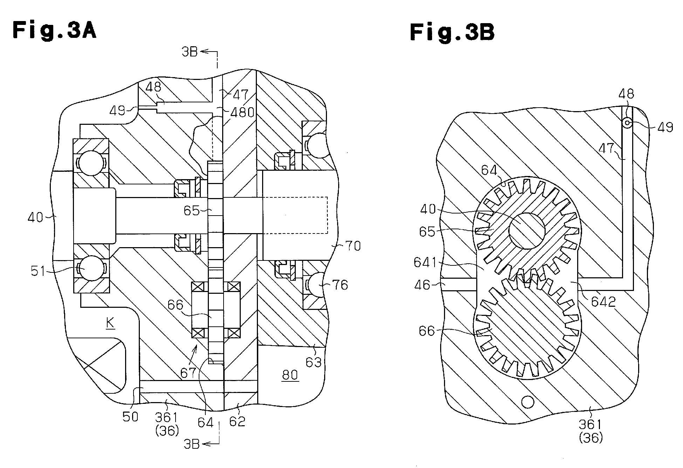

As shown in Figs. 3A and 3B, a drive gear 65, which is fastened to the drive shaft 40, and a driven gear 66, which is meshed with the drive gear 65, are arranged in the pump chamber 64. The pump chamber 64, the drive gear 65, and the driven gear 66 constitute delivery means (or a delivery apparatus), which is a gear pump 67 in the first embodiment. As shown in Fig. 3B, the drive gear 65 and the driven gear 66 divide the interior of the pump chamber 64 into a suction chamber 641 and a discharge chamber 642.

As shown in Fig. 1, a support block 63 is fixed in the rear portion of the center housing member 36. A rotary shaft 70 is rotationally supported on the support block 63 via a bearing 71. The rotary shaft 70 is coupled to the drive shaft 40 to be coaxial with the drive shaft 40.

A scroll expander 72 is provided between the support block 63 and the rear housing member 39.

The structure of the expander 72 will now be described.

An eccentric shaft 73 is provided on the rear end of the rotary shaft 70. The eccentric shaft 73 orbits about the rotation axis of the rotary shaft 70 by rotation of the rotary shaft 70. A movable scroll 74 is rotationally supported on the eccentric shaft 73 via a bush 75 and a bearing 76. The movable scroll 74 includes an end plate 741, which is supported by the bearing 76, and a volute wall 742, which protrudes from the end plate 741.

A fixed scroll 77 is secured in the rear portion of the center housing member 36 to face the movable scroll 74. The fixed scroll 77 includes an end plate 771 and a volute wall 772, which protrudes from the end plate 771 toward the support block 63. The volute wall 742 of the movable scroll 74 and the volute wall 772 of the fixed scroll 77 mesh with each other and define an expansion chamber 78. The volume of the expansion chamber 78 is changeable.

A supply chamber 79 is defined between the end plate 771 and the rear housing member 39. A supply port 773 is formed in the center portion of the end plate 771 to communicate with the supply chamber 79. An introduction port 391 is formed in the rear housing member 39. An outlet chamber 80 is formed between the side plate 62 and the support block 63. Refrigerant in the expansion chamber 78 is discharged to the outlet chamber 80. An outlet port 362 is formed in the circumferential wall of the center housing member 36 to communicate with the outlet chamber 80.

The Rankine cycle circuit 13 of the waste heat utilization apparatus 11 will now be described.

As shown in Fig. 2, the Rankine cycle circuit 13 includes the expander 72 of the fluid machine 34, a condenser 29, the gear pump 67 of the fluid machine 34, a first boiler 20, and a second boiler 21.

The first boiler 20 includes a heat absorber 202 and a radiator 201. The heat absorber 202 of the first boiler 20 is connected to the discharge side of the pump chamber 64 of the gear pump 67 [see Figs. 3A and 3B] via a first channel 22. The radiator 201 is provided in a coolant circulation channel 23, which is connected to the engine 12. A radiator 24 is provided in the coolant circulation channel 23. The coolant (cooling fluid) that has cooled the engine 12 of the vehicle circulates in the coolant circulation channel 23 and dissipates heat at the radiator 201 and the radiator 24.

The second boiler 21 includes a heat absorber 212 and a radiator 211. The heat absorber 212 of the second boiler 21 is connected to the discharge side of the heat absorber 202 of the first boiler 20 via a connecting channel 25. The radiator 211 is provided in the exhaust passage 26 connected to the engine 12. The exhaust gas from the engine 12 is exhausted from a muffler 27 after dissipating heat through the radiator 211. The refrigerant discharged from the gear pump 67 is heated by waste heat from the engine 12 by heat exchange between the heat absorbers 202, 212 and the radiators 201, 211 of the first boiler 20 and the second boiler 21.

The introduction port 391 of the expander 72 [see Fig. 1] is connected to the discharge side of the heat absorber 212 of the second boiler 21 via a supply channel 28. The high-temperature and high-pressure refrigerant heated in the first boiler 20 and the second boiler 21 is introduced into the expander 72 via the supply channel 28. The condenser 29 is connected to the outlet port 362 of the expander 72 [see Fig. 1] via an outlet channel 30. Low-pressure refrigerant expanded in the expander 72 is discharged to the condenser 29 via the outlet channel 30. The pump chamber 64 of the gear pump 67 [see Fig. 1] is connected to the downstream side of the condenser 29 via a second channel 31.

The second channel 31, the first channel 22, the connecting channel 25, the supply channel 28, and the outlet channel 30 constitute a refrigerant circulation channel of the Rankine cycle circuit.

As shown in Fig. 3B, a suction passage 46 is connected to the suction chamber 641 of the pump chamber 64, and a discharge passage 47 is connected to the discharge chamber 642 of the pump chamber 64. The suction passage 46 constitutes part of the second channel 31, and the discharge passage 47 constitutes part of the first channel 22. The pump chamber 64, the discharge passage 47, and the suction passage 46 are formed in the end surface of the partition 361. The pump chamber 64, the discharge passage 47, and the suction passage 46 are recesses.

A branch passage 48 is connected to the discharge passage 47, and a restriction part, which is a restriction passage 49, is provided at the end of the branch passage 48. The restriction passage 49 is open to an internal space K in the generator housing member 37. The internal space K is an existence region where the alternator 43 is provided in the housing assembly 35.

As shown in Fig. 2, the delivery means, which is the gear pump 67, is provided in the refrigerant circulation channel between a branch portion 480 of the first channel 22, which is part of the refrigerant circulation channel, and the branch passage 48, and the second heat exchanger, which is the condenser 29. That is, the gear pump 67 is provided at a section of the refrigerant circulation channel that is upstream of the first heat exchanger, which is the boilers 20, 21, and downstream of the second heat exchanger, which is the condenser 29.

As shown in Fig. 3A, an outflow passage 50 extends through the partition 361 and the side plate 62 of the center housing member 36. An entrance port 501 of the outflow passage 50 is provided at a position lower than the rotor 41 of the alternator 43. The internal space K communicates with the outlet chamber 80 through the outflow passage 50.

The pump operation of the gear pump 67 shown in Fig. 3B causes the refrigerant in the second channel 31 to be drawn into the suction chamber 641 of the pump chamber 64 and fed to the discharge chamber 642. Part of the refrigerant fed to the discharge chamber 642 passes through the first channel 22, the first boiler 20, the second boiler 21, the expander 72, and the condenser 29, and is refluxed to the suction chamber 641 of the pump chamber 64. The remaining of the refrigerant fed to the discharge chamber 642 flows through the branch passage 48 and the restriction passage 49 into the internal space K. The refrigerant that has flowed into the internal space K passes through the outflow passage 50, the outlet chamber 80, the outlet port 362, the outlet channel 30, and the condenser 29, and is refluxed to the suction chamber 641 of the pump chamber 64.

As shown in Fig. 2, a temperature sensor 81 and electric load detecting means (or an electric load detecting section) 82 are electrically connected to the control section 32. The temperature sensor 81 detects the coolant temperature in the coolant circulation channel 23. The electric load detecting section 82 detects electricity necessary for use in the electric devices (a head light, an electromagnetic clutch for compressor used in an air conditioning system) installed in the vehicle.

Operation of the waste heat utilization apparatus 11 will now be described.

When the engine 12 is started, the control section 32 obtains information regarding requested load (required electricity) from the electric load detecting section 82. Based on the obtained information, the control section 32 starts to make determination of whether there is a power generation request. Also, the control section 32 obtains information regarding the coolant temperature in the coolant circulation channel 23 from the temperature sensor 81.

If there is a power generation request, the control section 32 magnetizes the electromagnetic clutch 60 and brings the electromagnetic clutch 60 into a connected state. Accordingly, the drive shaft 40 is rotated, and the alternator 43 generates electricity. The electricity generated by the alternator 43 is stored in the battery 45.

If there is no power generation request, and the detected temperature is greater than or equal to a predetermined temperature, the control section 32 temporarily magnetizes the electromagnetic clutch 60 and temporarily brings the electromagnetic clutch 60 into the connected state. Accordingly, the drive shaft 40 starts to rotate. When the drive shaft 40 starts to rotate by temporarily bringing the electromagnetic clutch 60 into the connected state, the drive gear 65 of the gear pump 67 and the rotary shaft 70 of the expander 72 temporarily start to rotate integrally with the drive shaft 40. Rotation of the drive gear 65 of the gear pump 67 is transmitted to the driven gear 66, and the drive gear 65 and the driven gear 66 rotate in opposite directions while being meshed with each other. Accordingly, the refrigerant in the second channel 31 passes through the gear pump 67 and is fed to the first channel 22.

Part of the refrigerant fed to the first channel 22 passes through the heat absorber 202 of the first boiler 20, the connecting channel 25, and the heat absorber 212 of the second boiler 21 and fed to the supply channel 28. The refrigerant that passes through the heat absorber 202 of the first boiler 20 and the heat absorber 212 of the second boiler 21 is heated by the waste heat from the engine 12.

The remaining of the refrigerant fed to the first channel 22 flows through the branch passage 48 and the restriction passage 49 into the internal space K. Since the refrigerant that has passed through the condenser 29 and flows in the second channel 31 has been cooled and liquefied, the temperature of the liquid refrigerant fed out from the gear pump 67 is low. Thus, the low-temperature liquid refrigerant that has flowed into the internal space K cools the alternator 43 in the internal space K. The refrigerant that has cooled the alternator 43 flows to the outlet chamber 80 via the outflow passage 50, and the refrigerant that has flowed to the outlet chamber 80 is returned to the gear pump 67 via the outlet channel 30 and the condenser 29.

The high-pressure refrigerant heated by the boilers 20, 21 (the first heat exchanger) is introduced into the expansion chamber 78 via the introduction port 391 and the supply chamber 79 of the expander 72 and is expanded. The expansion of the refrigerant causes the expander 72 to output mechanical energy (rotation applying force), and the rotation applying force assists rotation of the rotary shaft 70 and the drive shaft 40. The expander 72 utilizes the refrigerant and applies rotational force to the drive shaft 40 of the alternator 43. The expanded refrigerant with reduced pressure is discharged to the outlet channel 30. The refrigerant discharged to the outlet channel 30 passes through the condenser 29 and is refluxed to the gear pump 67.

The predetermined temperature is set as the coolant temperature that enables rotating the drive shaft 40 by a predetermined number of rotations or more using only the rotation applying force of the expander 72 generated by expansion of the refrigerant. Also, the period during which the electromagnetic clutch 60 is temporarily held in the connected state is set to a period that the drive shaft 40 can be considered to have reached the predetermined number of rotations or more. When the electromagnetic clutch 60 is switched from the temporarily connected state to a disconnected state, the alternator 43 generates electricity by only the rotation applying force of the expander 72 generated by expansion of the refrigerant.

If the electric power generated by only the rotation applying force of the expander 72 generated by expansion of the refrigerant is insufficient for the required load (necessary electricity), the control section 32 magnetizes the electromagnetic clutch 60 and brings the electromagnetic clutch 60 into the connected state. Thus, the alternator 43 generates electricity by both the rotational force of the engine 12 and the rotation applying force of the expander 72 generated by expansion of the refrigerant.

The first embodiment has the following advantages.
(1) The heat of the refrigerant that has cooled the alternator 43 is absorbed by the second heat exchanger, which is the condenser 29. Thus, part of the refrigerant that is cooled by the condenser 29 becomes low temperature and flows to the internal space K, which is an existence region of the alternator 43. Therefore, the structure in which the alternator 43 is cooled by the refrigerant that has been cooled by the condenser 29 contributes to the improvement in the cooling efficiency of the alternator 43.
(2) The outflow passage 50 is connected to the section of the refrigerant circulation channel that is downstream of the expander 72 (that is, the outlet chamber 80). Since the internal space K and the outlet chamber 80, which are connected by the outflow passage 50, are adjacent to each other with the partition 361 and the side plate 62 located in between, the length of the outflow passage 50 is reduced. This is advantageous in easily forming the outflow passage 50.
(3) The branch passage 48 and the restriction passage 49 connect the section of the refrigerant circulation channel that is downstream of the gear pump 67 (that is, the discharge passage 47) to the internal space K. Thus, the length of the branch passage 48 and the restriction passage 49, which extend through the partition 361, is reduced. This is advantageous in easily forming the branch passage 48.
(4) The distribution ratio of the refrigerant to the first heat exchanger, which is the boilers 20, 21, and the internal space K, which is the existence region of the alternator 43, is determined by the restricting degree of the restriction passage 49 located upstream of the internal space K. The amount of the liquid refrigerant appropriate for efficiently cooling the alternator 43 is introduced to the internal space K by appropriately setting the restricting degree of the restriction passage 49. The restriction passage 49 located upstream of the internal space K is important in adjusting the distribution ratio of the refrigerant to the first heat exchanger and the internal space K.
(5) In the brush alternator, the liquid refrigerant might cause a contact failure of the brush, or wear debris of the brush might enter the refrigerant circuit and clog the valve. The brushless alternator 43 does not cause such problems. Since the liquid refrigerant cools the alternator 43, the cooling efficiency of the alternator 43 is high. Thus, the power generation efficiency of the alternator 43 is increased, and the size of the alternator 43 is reduced. Even if the concentrated winding coil 421 is formed by a normal lead wire that is poorer than a rectangular wire in reducing heat generation but is advantageous in regard to costs, the temperature increase of the coil 421 is inhibited by sufficient cooling performance. The coil 421 of the stator 42 may be formed using a rectangular wire that is disadvantageous in regard to costs but is excellent in reducing heat generation.
(6) Since the alternator 43, which generates electricity by rotational force of the engine 12, is also used as the generator that generates electricity utilizing the waste heat, a new generator for utilizing the waste heat is not necessary.
(7) The structure in which the alternator 43 and the electromagnetic clutch 60 are accommodated in the housing assembly 35 of the fluid machine 34 is advantageous in reducing the space occupied by the entire apparatus as compared to the structure in which the alternator 43 and the electromagnetic clutch 60 are arranged outside the housing assembly 35.
(8) If the rotor 41 stirs the liquid refrigerant, the waste heat that should be recovered for power generation is reduced due to rotational resistance of the liquid refrigerant with respect to the rotor 41. Thus, the waste heat recovery efficiency is reduced. Since the entrance port 501 of the outflow passage 50 is lower than the rotor 41 of the alternator 43, the liquid surface is lower than the rotor 41 even if the liquid refrigerant collects in the internal space K. Thus, the rotor 41 does not stir the liquid refrigerant.

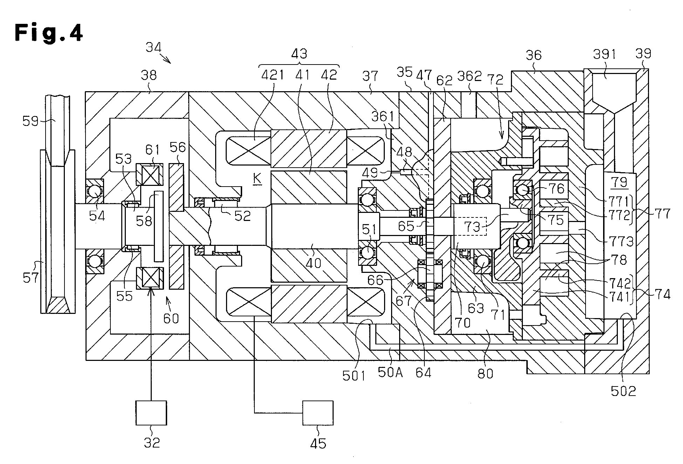

A second embodiment shown in Fig. 4 will now be described. Like or the same reference numerals are given to those components that are like or the same as the corresponding components of the first embodiment and detailed explanations are omitted.

The entrance port 501 of an outflow passage 50A is open at the bottom of the internal space K of the generator housing member 37, and an exit port 502 of the outflow passage 50A is open in the supply chamber 79 (section of the refrigerant circulation channel upstream of the expander 72). The refrigerant that has flowed into the internal space K via the branch passage 48 and the restriction passage 49 flows out to the supply chamber 79 via the outflow passage 50A.

The refrigerant that is fed from the internal space K to the upstream of the expander 72 cools the alternator 43 and recovers waste heat, and the waste heat recovered from the alternator 43 is utilized for driving the expander 72. That is, the waste heat recovered from the alternator 43 is utilized for generating electricity by the alternator 43. The structure in which the refrigerant that has cooled the alternator 43 is fed upstream of the expander 72 increases the power generation efficiency of the alternator 43 utilizing the waste heat.

When the rotor 41 stirs the liquid refrigerant, the waste heat that should be recovered for power generation is reduced due to the rotational resistance of the liquid refrigerant with respect to the rotor 41. Thus, the waste heat recovery efficiency is reduced. Since the entrance port 501 of the outflow passage 50A is located at the bottom of the internal space K, that is, lower than the rotor 41 of the alternator 43, the liquid surface is lower than the rotor 41 even if the liquid refrigerant collects in the internal space K. Thus, the rotor 41 does not stir the liquid refrigerant.

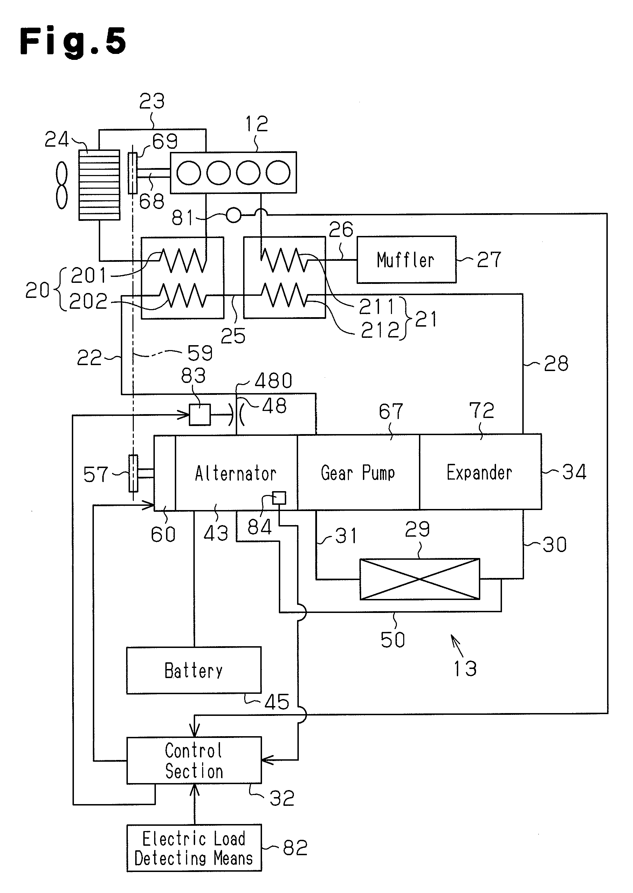

A third embodiment shown in Fig. 5 will now be described. Like or the same reference numerals are given to those components that are like or the same as the corresponding components of the first embodiment and detailed explanations are omitted.

In the third embodiment, a variable restriction mechanism 83 is located in the branch passage 48. The restriction opening degree of the variable restriction mechanism 83 is controlled by the control section 32. A temperature sensor 84 is provided in the generator housing member 37 [see Fig. 1]. The temperature detecting means in the internal space K, which is the temperature sensor 84, detects the temperature of the coil 421 [see Fig. 1]. The temperature information obtained by the temperature sensor 84 is sent to the control section 32.

The control section 32 controls the restriction opening degree of the variable restriction mechanism 83 based on the temperature information obtained by the temperature sensor 84. The control section 32 is control means that controls the restriction amount of the variable restriction mechanism 83 based on the temperature detected by the temperature sensor 84. For example, when the temperature of the coil 421 is low (the electric power generation of the alternator 43 per unit time is small), the restriction opening degree of the variable restriction mechanism 83 is reduced, and the flow rate of liquid refrigerant that flows from the branch passage 48 into the internal space K is reduced. When the temperature of the coil 421 is high (the electric power generation of the alternator 43 per unit time is great), the restriction opening degree of the variable restriction mechanism 83 is increased, and the flow rate of liquid refrigerant that flows from the branch passage 48 into the internal space K is increased.

Such a flow rate adjustment permits effective utilization of waste heat. That is, when heat generation of the alternator 43 is small, the liquid refrigerant is sent to the first heat exchanger (the boilers 21, 22) by a large amount, and the waste heat of the engine 12 is efficiently utilized.

When the expander 72 and the alternator 43 are driven at high speed, the volumetric efficiency of the gear pump 67 and the expander 72 is high. Thus, the amount of refrigerant that flows from the first channel 22 to the branch passage 48 needs to be increased to bring the refrigerant pressure in the supply channel 28 to a desirable pressure. Also, since heat generation at the alternator 43 is increased when the alternator 43 is driven at high speed, the flow rate of refrigerant for cooling the alternator 43 needs to be increased. Thus, when the alternator 43 is driven at high speed and heat generation is increased, the liquid refrigerant is sent to the internal space K by a large amount and the alternator 43 is efficiently cooled. In this manner, the cooling efficiency is improved.

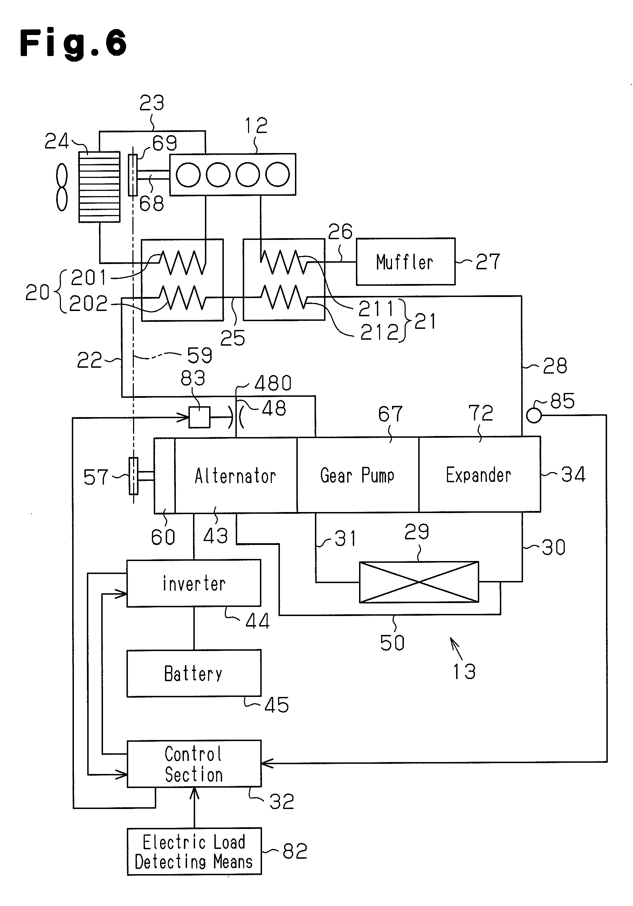

A fourth embodiment shown in Fig. 6 will now be described. Like or the same reference numerals are given to those components that are like or the same as the corresponding components of the third embodiment and detailed explanations are omitted.

The battery 45 is electrically connected to the alternator 43 via an inverter 44. The electric power generated by the alternator 43 is stored in the battery 45 via the inverter 44. The control section 32 is electrically connected to the inverter 44.

A pressure sensor 85 is electrically connected to the control section 32. The pressure sensor 85 detects the refrigerant pressure in the supply chamber 79 [see Fig. 1], and outputs a signal indicating the pressure to the control section 32. The pressure sensor 85 can be arranged at a section of the refrigerant circulation channel that is downstream of the gear pump 67 and upstream of the expander 72.

The control section 32 specifies a valve opening degree θ1 of the variable restriction mechanism 83 based on the refrigerant pressure in the supply chamber 79 detected by the pressure detecting means, which is the pressure sensor 85 in the fourth embodiment. The control section 32 functions as operating condition reflecting factor grasping means (or operating condition reflecting factor grasping section) for detecting the electric power generation (operating condition reflecting factor) of the alternator 43. The control section 32 specifies a valve opening degree θ2 of the variable restriction mechanism 83 based on the detected electric power generation of the alternator 43. The control section 32 compares the specified valve opening degree θ1 and the valve opening degree θ2 and selects the greater one of them.

If the valve opening degree θ1 is selected, the valve opening degree of the variable restriction mechanism 83 is set to the valve opening degree θ1. Thus, the refrigerant pressure in the supply channel 28 becomes a desirable pressure. If the valve opening degree θ2 is selected, the valve opening degree of the variable restriction mechanism 83 is set to the valve opening degree θ2. Thus, the flow rate of refrigerant in the branch passage 48 becomes a flow rate desirable for cooling the alternator 43.

The control section 32 is control means that selects a greater valve opening degree (smaller restriction amount) among the valve opening degree θ1 (first restriction amount) of the variable restriction mechanism 83 set in accordance with the pressure detected by the pressure sensor 85, and the valve opening degree θ2 (second restriction amount) of the variable restriction mechanism 83 set in accordance with the electric power generation (operating condition reflecting factor) grasped by the operating condition reflecting factor grasping means.

By selecting one of the valve opening degrees θ1, θ2, the operator can preferentially select whether to set the refrigerant pressure in the supply channel 28 to a desirable pressure or to optimally cool the alternator 43.

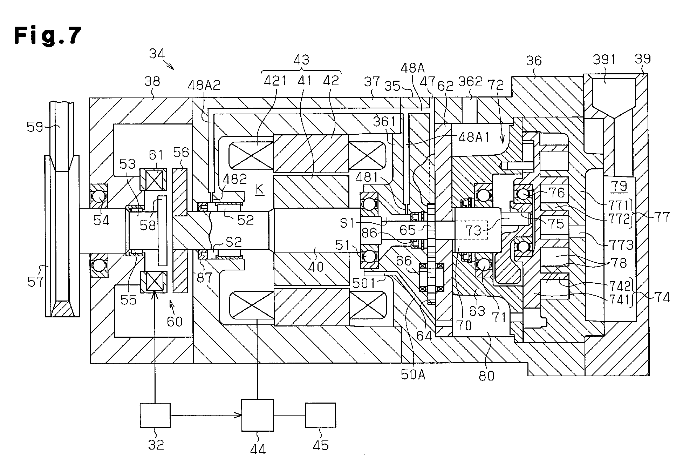

A fifth embodiment shown in Fig. 7 will now be described. Like or the same reference numerals are given to those components that are like or the same as the corresponding components of the first embodiment and detailed explanations are omitted.

A branch passage 48A that branches from the discharge passage 47 further branches into a passage 48A1 and a passage 48A2. A shaft sealing member 86 is provided on the drive shaft 40 between the gear pump 67 and the bearing 51, and an exit port 481 of the passage 48A1 is located between the bearing 51 and the shaft sealing member 86 and opens to a space S1 around the drive shaft 40. The restriction part, which is the exit port 481, is located at a position to guide the refrigerant in the passage 48A1, which is part of the branch passage 48A, to the bearing 51 and the shaft sealing member 86. A shaft sealing member 87 is provided at the innermost part of an accommodation chamber S2, which accommodates a bearing 52, and an exit port 482 of the passage 48A2 is open to the accommodation chamber S2 between the bearing 52 and the shaft sealing member 87. The restriction part, which is the exit port 482, is located at a position to guide the refrigerant in the passage 48A2, which is part of the branch passage 48A, to the bearing 52 and the shaft sealing member 87. The shaft sealing member 86 and the shaft sealing member 87 prevent leakage of refrigerant from the internal space K to the outside (space at which the pressure is different from the internal space K) along the circumferential surface of the drive shaft 40.

The liquid refrigerant in the passage 48A1 flows out to the space S1 from the exit port 481. Lubricant that is mixed in the liquid refrigerant that has flowed out to the space S1 lubricates the shaft sealing member 86 and the bearing 51. The liquid refrigerant in the passage 48A2 flows out to the accommodation chamber S2 from the exit port 482. Lubricant that is mixed in the liquid refrigerant that has flowed out to the accommodation chamber S2 lubricates the shaft sealing member 87 and the bearing 52.

The structure in which the exit ports 481, 482 of the branch passage 48A are located at positions that guide the refrigerant in the branch passage 48A to the bearings 51, 52, which rotationally support the drive shaft 40, sufficiently lubricates the bearings 51, 52 and the shaft sealing members 86, 87, and thereby increases the reliability of the bearings 51, 52 and the shaft sealing members 86, 87.

The entrance port 501 of the outflow passage 50A is provided at a position higher than the lowermost position of the rotor 41. The liquid refrigerant that has flowed from the branch passage 48A into the internal space K collects at the lower part of the internal space K. The liquid surface of the liquid refrigerant that has collected at the lower part of the internal space K reaches the entrance port 501 of the outflow passage 50A, and the liquid refrigerant that has collected at the lower part of the internal space K is stirred by the rotation of the rotor 41. The lubricant mixed in the stirred liquid refrigerant contributes to lubricating the bearings 51, 52.

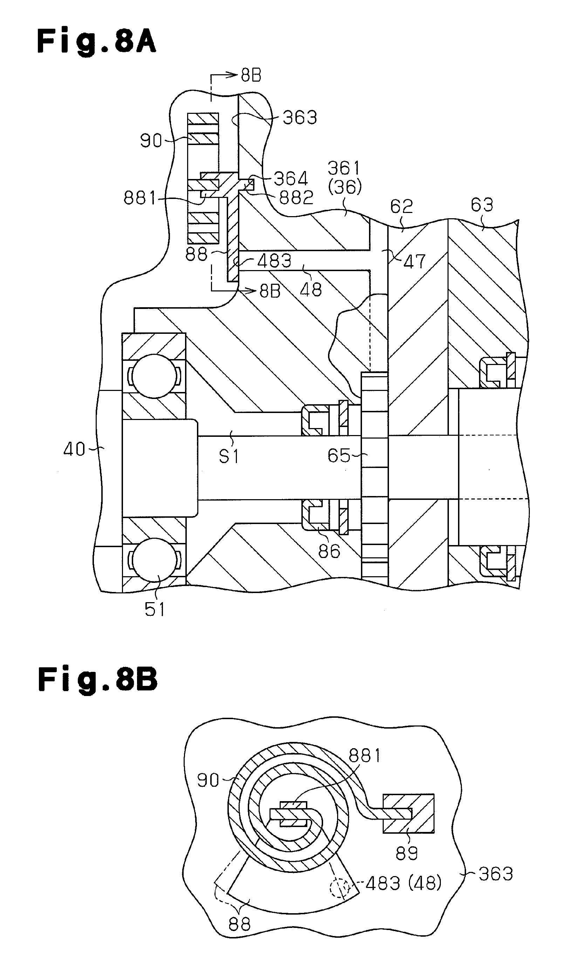

A sixth embodiment shown in Figs. 8A and 8B will now be described. Like or the same reference numerals are given to those components that are like or the same as the corresponding components of the first embodiment and detailed explanations are omitted.

As shown in Fig. 8A, a sectorial valve body 88 is joined to an end surface 363 of the partition 361 of the center housing member 36. A shaft pin 882 is integrally formed with a sectorial center 881, which is a radially central portion of the valve body 88. The shaft pin 882 is fitted in a shaft hole 364 formed in the end surface 363, and the valve body 88 is rotational about the shaft pin 882 while making surface contact with the end surface 363.

As shown in Fig. 8B, a support 89 is fastened to the end surface 363, and a spiral bimetal member 90 is supported on the support 89. The sectorial center 881 of the valve body 88 is fastened to the central end of the spiral bimetal member 90. The valve body 88, which is rotational about the shaft pin 882 selectively opens and closes an exit port 483 of the branch passage 48.

When the temperature in the internal space K is low, the bimetal member 90 has the shape as shown by the solid line in Fig. 8B, and the valve body 88 closes the exit port 483 of the branch passage 48. When the temperature in the internal space K is high, the shape of the bimetal member 90 changes such that the valve body 88 opens the exit port 483 of the branch passage 48.

The bimetal member 90 provided in the internal space K deforms in accordance with increase in the temperature in the internal space K to increase the cross-sectional area of the exit port 483 of the branch passage 48.

Since the valve opening degree of the valve body 88 is changed by deformation of the bimetal member 90, which deforms due to direct influence of the temperature change in the internal space K, the structure of the variable restriction mechanism is simplified. The valve body 88 and the bimetal member 90 of the branch passage 48 form the variable restriction mechanism that increases the cross-sectional area of the branch passage 48 in accordance with the temperature increase in the internal space K.

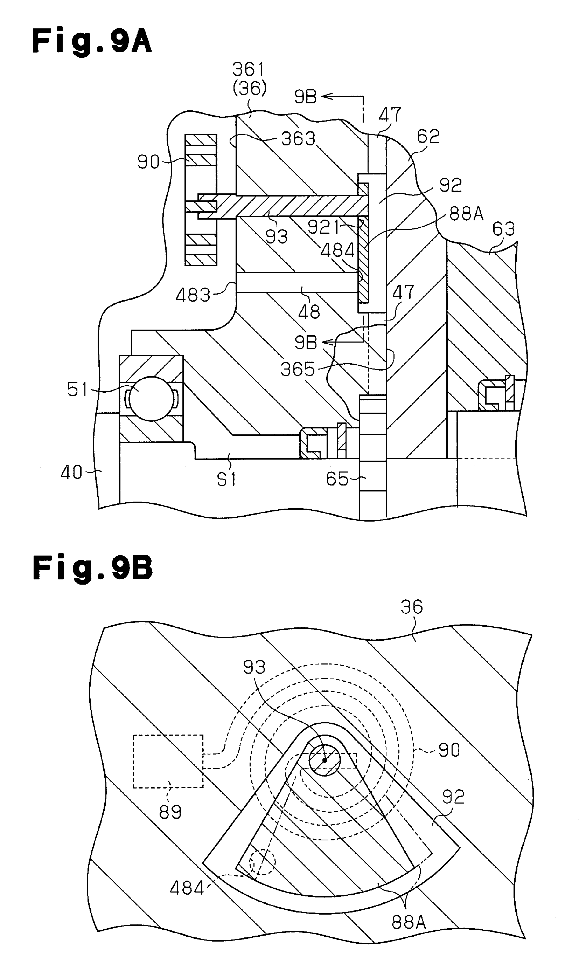

A seventh embodiment shown in Figs. 9A and 9B will now be described. Like or the same reference numerals are given to those components that are like or the same as the corresponding components of the sixth embodiment and detailed explanations are omitted.

As shown in Fig. 9A, an accommodation recess 92 is formed in an end surface 365 of the center housing member 36 that contacts the side plate 62 to intersect the discharge passage 47, and a valve body 88A is accommodated in the accommodation recess 92 in a state in which the valve body 88A makes surface contact with a bottom surface 921 of the accommodation recess 92. The accommodation recess 92 forms part of the discharge passage 47.

The first end portion of a support shaft 93 extends from the end surface 363 of the center housing member 36 through the partition 361 and the bottom surface 921 and protrudes in the accommodation recess 92. The sectorial center of the valve body 88A is fastened to the first end portion of the support shaft 93. The valve body 88A is rotational about the support shaft 93 in the state in which the valve body 88A makes surface contact with the bottom surface 921. An entrance port 484 of the branch passage 48 is located on the bottom surface 921, and the valve body 88A, which is rotational about the support shaft 93, selectively opens and closes the entrance port 484 of the branch passage 48.

A second end portion of the support shaft 93 is fastened to the central end of the bimetal member 90 located in the internal space K. The bimetal member 90 deforms in accordance with the temperature increase in the internal space K to increase the cross-sectional area of the entrance port 484 of the branch passage 48. The valve body 88A and the bimetal member 90 of the branch passage 48 constitute the variable restriction mechanism, which increases the cross-sectional area of the branch passage 48 in accordance with the temperature increase in the internal space K.

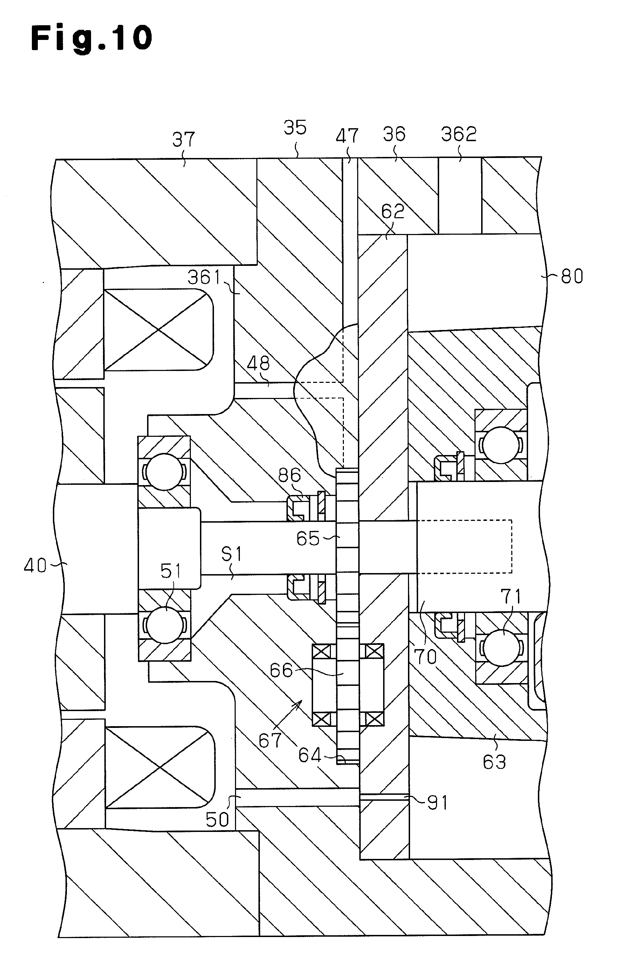

An eighth embodiment shown in Fig. 10 will now be described. Like or the same reference numerals are given to those components that are like or the same as the corresponding components of the first embodiment and detailed explanations are omitted.

In the eighth embodiment, a restriction passage 91 is provided as part of the outflow passage 50 instead of the restriction passage in the branch passage 48. When the alternator 43 and the gear pump 67 are adjacent to each other, the pressure in the internal space K is preferably high to some degree in the aspect of reliability of the shaft sealing member 86. When the restriction passage 91 is provided in the outflow passage 50, the pressure difference (seal pressure difference) between the alternator 43 and the gear pump 67 across the shaft sealing member 86 is reduced, and the reliability of the shaft sealing member 86 is enhanced.

The present invention may also be modified as follows.

In the second embodiment, the internal space K and the supply chamber 79 may be connected by a tube, and the tube may serve as the outflow passage 50A.

As the operating condition reflecting factor, which reflects the operating condition of the alternator 43, current output from a rectifier associated with the alternator 43 may be employed. The current is an electric power generation reflecting factor, which reflects the electric power generation of the alternator 43 (electric rotating machine), and the control section 32 serves as an electric power generation reflecting factor grasping section, which grasps the electric power generation reflecting factor.

As the operating condition reflecting factor, which reflects the operating condition of the alternator 43, current input to the coil 421 of the alternator 43 and the number of rotations of the rotor 41 (number of rotations of the drive shaft 40) may be employed. The current and the number of rotations are the electric power generation reflecting factors, which reflect the electric power generation of the alternator 43 (electric rotating machine), and the control section 32 functions as the electric power generation reflecting factor grasping means (or electric power generation reflecting factor grasping section) that grasps the electric power generation reflecting factor.

As the operating condition reflecting factor, which reflects the operating condition of the alternator 43, a command current value that is commanded by the control section 32 to the inverter 44 and the number of rotations of the rotor 41 (number of rotations of the drive shaft 40) may be employed. The command current and the number of rotations are the electric power generation reflecting factors that reflect the electric power generation of the alternator 43 (electric rotating machine), and the control section 32 functions as the electric power generation reflecting factor grasping means (or electric power generation reflecting factor grasping section) that grasps the electric power generation reflecting factors.

The bimetal member 90 may selectively open and close the middle part of the branch passage 48.

The bimetal member 90 may selectively open and close the entrance port 501 of the outflow passage 50.

The bimetal member 90 may selectively open and close the exit port of the outflow passage 50.

The bimetal member 90 may selectively open and close a middle part of the outflow passage 50.

A sheet-shaped bimetal member may be used to selectively open and close the exit port 483 of the branch passage 48 or the entrance port 501 of the outflow passage 50. In this case, when the temperature in the internal space K is high, the sheet-shaped bimetal member warps so that the exit port 483 of the branch passage 48 or the entrance port 501 of the outflow passage 50 is opened.

The generator that also functions as the electric motor may be used.

The generator other than the alternator may be used as the generator in the housing assembly 35.

The present invention may be applied to an electric rotating machine such as an electric motor and a motor generator.

The present invention may be applied to a waste heat utilization apparatus other than for vehicles.

As the expander, a vane-type expander may be used.

As the expander, an expander of types other than scroll-type and vane-type may be used. For example, an axial flow fan may be mounted on the drive shaft 40, and the axial flow fan and the drive shaft 40 may be integrally rotated by refrigerant that flows in the axial direction of the drive shaft 40.

The technical ideas obtainable from the above embodiments other than those disclosed in the claim section are described below with their advantages.
(a) The waste heat utilization apparatus according to claim 9, wherein the control means functions as operating condition reflecting factor grasping means for detecting electric power generation of the electric rotating machine.
(b) The waste heat utilization apparatus according to claim 12, wherein the variable restriction mechanism includes a valve body that changes the cross-sectional area of an exit port of the branch passage or the cross-sectional area of an entrance port of the outflow passage, and a bimetal member, which supports the valve body, the bimetal member being located in the existence region, and the bimetal member deforms in accordance with the temperature increase in the existence region to increase the cross-sectional area of the exit port of the branch passage or the cross-sectional area of the entrance port of the outflow passage.

### Description of the Reference Numerals

11... waste heat utilization apparatus, 12... engine, which is combustion engine serving as waste heat source, 20, 21...first heat exchanger, which is boiler, 29...second heat exchanger, which is condenser, 32... control means or operating condition reflecting factor grasping means, which is control section, 35... housing assembly, 40... drive shaft, 41... rotor, 43...alternator, which is generator serving as electric rotating machine, 48, 48A... branch passage, 480... branch portion, 481, 482... restriction passage, which is exit port, 484... entrance port, 49, 91... restriction part, which is restriction passage, 50, 50A, 50B...outflow passage, 501...entrance port, 67...delivery means, which is gear pump, 51, 52... bearing, 68... rotating output shaft, which is crankshaft, 72... expander, 81... first temperature detecting means, which is temperature sensor, 83... variable restriction mechanism, 84...temperature detecting means, which is temperature sensor, 85... pressure detecting means, which is pressure sensor, 86, 87... shaft sealing member, 88, 88A... valve body constituting variable restriction mechanism, 90... bimetal member constituting variable restriction mechanism, K... existence region, which is internal space.

## Claims

1. A waste heat utilization apparatus including a waste heat source, an electric rotating machine, a first heat exchanger, which transmits waste heat of the waste heat source to refrigerant that flows in a refrigerant circulation channel, an expander, which applies rotational force to a drive shaft of the electric rotating machine utilizing the refrigerant that has passed through the first heat exchanger, and a second heat exchanger, which absorbs heat from the refrigerant that has passed through the expander, wherein the electric rotating machine and the expander are accommodated in a housing assembly, the waste heat utilization apparatus comprising:
a branch passage connected to a section of the refrigerant circulation channel that is upstream of the first heat exchanger and downstream of the second heat exchanger, and to an existence region of the electric rotating machine in the housing assembly;
an outflow passage connecting a section of the refrigerant circulation channel that is downstream of the first heat exchanger and upstream of the second heat exchanger to the existence region; and
delivery means for delivering the refrigerant from the branch passage to the outflow passage.

2. The waste heat utilization apparatus according to claim 1, wherein the delivery means is located in a section of the refrigerant circulation channel between the second heat exchanger and a connecting portion of the branch passage to the refrigerant circulation channel.

3. The waste heat utilization apparatus according to claim 1 or 2, wherein one of the branch passage and the outflow passage has a restriction part.

4. The waste heat utilization apparatus according to claim 1 or 2, wherein the branch passage has a restriction part at a section upstream of the existence region of the electric rotating machine.

5. The waste heat utilization apparatus according to claim 1 or 2, wherein the delivery means is provided between the electric rotating machine and the expander to be adjacent to the electric rotating machine.

6. The waste heat utilization apparatus according to claim 5, wherein the outflow passage has a restriction part.

7. The waste heat utilization apparatus according to any one of claims 3, 4, and 6, wherein the restriction part is a variable restriction mechanism.

8. The waste heat utilization apparatus according to claim 7, further comprising:
control means for controlling the restriction amount of the variable restriction mechanism, and temperature detecting means for detecting the temperature in the existence region,
wherein the control means controls the restriction amount of the variable restriction mechanism based on the temperature detected by the temperature detecting means.

9. The waste heat utilization apparatus according to claim 7, further comprising:
control means for controlling the restriction amount of the variable restriction mechanism, and grasping means for grasping an operating condition reflecting factor, which reflects the operating condition of the electric rotating machine,
wherein the control means controls the restriction amount of the variable restriction mechanism based on the operating condition reflecting factor grasped by the grasping means.

10. The waste heat utilization apparatus according to claim 9, wherein the grasping means grasps an electric power generation reflecting factor, which reflects the electric power generation of the electric rotating machine.

11. The waste heat utilization apparatus according to claim 9 or 10, wherein
the delivery means is located at a section of the refrigerant circulation channel upstream of the first heat exchanger and downstream of the second heat exchanger,
the waste heat utilization apparatus further comprises pressure detecting means for detecting the pressure in a section of the refrigerant circulation channel that is downstream of the delivery means and upstream of the expander,
the control means selects the smaller restriction amount from a first restriction amount of the variable restriction mechanism set in accordance with the pressure detected by the pressure detecting means, and a second restriction amount of the variable restriction mechanism set in accordance with the operating condition reflecting factor grasped by the grasping means.

12. The waste heat utilization apparatus according to claim 3, wherein
the restriction part is a variable restriction mechanism, and
the variable restriction mechanism includes, in the existence region, a bimetal member for increasing the cross-sectional area of the branch passage or the outflow passage in accordance with temperature increase in the existence region.

13. The waste heat utilization apparatus according to any one of claims 1 to 12, wherein the outflow passage is connected to a section of the refrigerant circulation channel downstream of the expander.

14. The waste heat utilization apparatus according to any one of claims 1 to 12, wherein the outflow passage is connected to a section of the refrigerant circulation channel upstream of the expander.

15. The waste heat utilization apparatus according to any one of claims 1 to 14, wherein an entrance port of the outflow passage is located at a position lower than a rotor of the electric rotating machine.

16. The waste heat utilization apparatus according to any one of claims 1 to 14, wherein an entrance port of the outflow passage is located at a position higher than the lowermost position of a rotor of the electric rotating machine.

17. The waste heat utilization apparatus according to any one of claims 1 to 16, wherein an exit port of the branch passage is located at a position to guide the refrigerant in the branch passage to a bearing that rotationally supports the drive shaft.

18. The waste heat utilization apparatus according to claim 5 or 6, further comprising:
a shaft sealing member for preventing leakage of the refrigerant from the existence region to the outside along the circumferential surface of the drive shaft,
wherein an exit port of the branch passage is located at a position to guide the refrigerant in the branch passage to the shaft sealing member.

19. The waste heat utilization apparatus according to any one of claims 1 to 18, wherein the electric rotating machine is a brushless electric rotating machine.

20. The waste heat utilization apparatus according to any one of claims 1 to 19, wherein
the waste heat source is a combustion engine, and
the electric rotating machine is an alternator, which generates electricity by rotation of a rotating output shaft of the combustion engine.
